# EUROPÄISCHE PATENTANMELDUNG

(11) **EP 4 628 293 A1**
(43) Veröffentlichungstag der Anmeldung: **08.10.2025**
(21) Anmeldenummer: 25161822.9
(22) Anmeldetag: 05.03.2025
(51) Int. Cl.: B30B 11/00, G01N 21/27, B30B 11/08

(54) **RUNDLÄUFERTABLETTENPRESSE**

(30) Priorität: 04.04.2024 DE 102024109411
(71) Anmelder: Fette Compacting GmbH, 21493 Schwarzenbek (DE)
(72) Erfinder: Evers, Alexander, 22941 Bargteheide (DE); Kolbe, Sven, 21514 Büchen (DE); Lüdemann, Stefan, 21035 Hamburg (DE)
(74) Vertreter: Hauck Patent- und Rechtsanwälte PartmbB

(57) **Zusammenfassung**

Die Erfindung betrifft eine Rundläufertablettenpresse, umfassend einen mittels eines Drehantriebs in einem Pressraum (11) der Rundläufertablettenpresse drehbaren Rotor, wobei der Rotor eine obere Stempelführung (18) für obere Pressstempel (14) und eine untere Stempelführung (20) für untere Pressstempel (16) sowie eine zwischen den Stempelführungen angeordnete Matrizenscheibe (10) aufweist, wobei die Pressstempel (14, 16) mit Kavitäten (12) der Matrizenscheibe (10) zusammenwirken, wobei die Rundläufertablettenpresse weiter eine Fülleinrichtung (26) umfasst, durch die zu verpressendes Pulvermaterial in die Kavitäten (12) der Matrizenscheibe (10) gefüllt wird, und wobei die Rundläufertablettenpresse eine Druckeinrichtung (34) mit einer oberen Druckeinheit (40) und einer unteren Druckeinheit (42) umfasst, die im Betrieb mit den oberen Pressstempeln (14) und mit den unteren Pressstempeln (16) zum Verpressen des Pulvermaterials in den Kavitäten (12) der Matrizenscheibe (10) zu Tabletten (48) zusammenwirken, wobei in dem Pressraum (11) ein Tablettensensor (56) angeordnet ist, der dazu ausgebildet ist, eine Inhaltseigenschaft von in der Rundläufertablettenpresse hergestellten Tabletten (48) zu messen

## Beschreibung

Die Erfindung betrifft eine Rundläufertablettenpresse, umfassend einen mittels eines Drehantriebs in einem Pressraum der Rundläufertablettenpresse drehbaren Rotor, wobei der Rotor eine obere Stempelführung für obere Pressstempel und eine untere Stempelführung für untere Pressstempel sowie eine zwischen den Stempelführungen angeordnete Matrizenscheibe aufweist, wobei die Pressstempel mit Kavitäten der Matrizenscheibe zusammenwirken, wobei die Rundläufertablettenpresse weiter eine Fülleinrichtung umfasst, durch die zu verpressendes Pulvermaterial in die Kavitäten der Matrizenscheibe gefüllt wird, und wobei die Rundläufertablettenpresse eine Druckeinrichtung mit einer oberen Druckeinheit und einer unteren Druckeinheit umfasst, die im Betrieb mit den oberen Pressstempeln und mit den unteren Pressstempeln zum Verpressen des Pulvermaterials in den Kavitäten der Matrizenscheibe zu Tabletten zusammenwirken, wobei in dem Pressraum ein Tablettensensor angeordnet ist, der dazu ausgebildet ist, eine Inhaltseigenschaft von in der Rundläufertablettenpresse hergestellten Tabletten zu messen.

In Rundläufertablettenpressen ist regelmäßig eine Vielzahl von oberen und unteren Pressstempeln vorgesehen, die paarweise jeweils einer Kavität einer Matrizenscheibe zugeordnet sind. Im Betrieb der Rundläufertablettenpresse drehen die oberen und unteren Pressstempel gemeinsam mit der Matrizenscheibe, wobei ihre axiale Bewegung durch Steuerkurven gesteuert und durch obere und untere Stempelführungen geführt wird. Im Zuge der Drehung durchläuft die Matrizenscheibe verschiedene Einrichtungen der Rundläufertablettenpresse, nämlich eine Fülleinrichtung, in der zu verpressendes Pulvermaterial in die Kavitäten der Matrizenscheibe gefüllt wird und eine Druckeinrichtung, in der die oberen und unteren Pressstempel durch obere und untere Druckeinheiten, beispielsweise Druckrollen, zum Verpressen des Pulvermaterials zu Presslingen, wie Tabletten, in die Kavitäten gedrückt werden. Nachfolgend zu der Druckeinrichtung werden die oberen Pressstempel nach oben aus den Kavitäten geführt und die in den Kavitäten erzeugten Presslinge werden durch die unteren Pressstempel auf die Oberseite der Matrizenscheibe geschoben. Beispielsweise durch einen Abstreifer werden die Presslinge anschließend von der Matrizenscheibe in einen Ausgang der Rundläufertablettenpresse abgestreift, von wo sie einer weiteren Verarbeitung zugeführt werden.

In Rundläufertablettenpressen werden Tablettensensoren zum Messen von Inhaltseigenschaften der in der Presse hergestellten Tabletten eingesetzt, beispielsweise dem Anteil eines aktiven pharmazeutischen Bestandteils (API). Ein solcher Tablettensensor ist zum Beispiel bekannt aus EP 1 568 480 B1. Neben einem oder mehreren aktiven pharmazeutischen Bestandteilen umfassen in Rundläufertablettenpressen hergestellte Tabletten üblicherweise einen oder mehrere Exzipienten. Das Gesamtgewicht von in der Tablettenpresse hergestellten Tabletten ist bekannt und kann ebenfalls gemessen werden. Anhand der Messwerte des Tablettensensors betreffend beispielsweise den API-Inhalt in der Tablette kann auf diese Weise überprüft werden, ob der API-Inhalt und das Gewicht der Tabletten innerhalb vorgegebener Parameter liegen.

Der in EP 1 568 480 B1 beschriebene Tablettensensor ist ein NIR- oder LIF-Sensor, der in dem Pressraum oberhalb der Matrizenscheibe derart angeordnet ist, dass er Messwerte von in der Tablettenpresse hergestellten Tabletten erfasst, nachdem die Oberstempel aus den Kavitäten heraus bewegt wurden. Der Tablettensensor ist stationär oberhalb der Matrizenscheibe angeordnet, sodass die sich noch innerhalb der Kavität der Matrizenscheibe befindlichen Tabletten mit der Rotordrehung durch einen Messbereich des Tablettensensors bewegt werden.

Um mit einem solchen Tablettensensor zutreffende Messwerte zu ermitteln, ist es bekannt, einen Weißabgleich des Tablettensensors durchzuführen. Dafür wird der Tablettensensor außerhalb der Tablettenpresse über eine Weiß- oder Grau-Referenzoberfläche gehalten, sodass der Messbereich die Referenzoberfläche erfasst. Auf dieser Grundlage wird der Tablettensensor gegen die Referenzoberfläche abgeglichen. Damit können zuverlässige Messwerte erfasst werden. Ein Problem besteht allerdings, wenn nachfolgend zu dem externen Abgleich Parameteränderungen innerhalb der Rundläufertablettenpresse durch Einflüsse während des Tablettierprozesses auftreten. Auch Lichtleistungsschwankungen haben einen Einfluss auf die Messwerte des Tablettensensors. Eine Nachjustieren des Tablettensensors im Prozess ist nicht möglich.

Ausgehend von dem erläuterten Stand der Technik liegt der Erfindung die Aufgabe zugrunde, eine Rundläufertablettenpresse der eingangs genannten Art bereitzustellen, mit der jederzeit zuverlässige Messwerte durch einen Tablettensensor auch bei sich im Laufe eines Tablettierprozesses verändernden Parametern möglich sind.

Die Erfindung löst die Aufgabe durch den Gegenstand des unabhängigen Anspruchs 1. Vorteilhafte Ausgestaltungen finden sich in den anhängigen Ansprüchen, der Beschreibung sowie den Figuren.

Für eine Rundläufertablettenpresse der eingangs genannten Art löst die Erfindung die Aufgabe dadurch, dass in dem Pressraum weiterhin eine optische Referenzoberfläche angeordnet ist, und dass ein Sensorantrieb vorgesehen ist, mit dem der Tablettensensor zwischen einer Messposition, in der ein Messbereich des Tablettensensors in der Rundläufertablettenpresse hergestellte Tabletten zum Messen der Inhaltseigenschaft der Tabletten erfasst, und einer Abgleichsposition, in der der Messbereich des Tablettensensors die Referenzoberfläche erfasst, verfahrbar ist, und dass eine Steuereinrichtung vorgesehen ist, an der Messwerte des Tablettensensors anliegen, und die dazu ausgebildet ist, den in der Abgleichsposition befindlichen Tablettensensor gegen die Referenzoberfläche abzugleichen.

Der grundsätzliche Aufbau einer Rundläufertablettenpresse, wie sie Gegenstand der vorliegenden Erfindung ist, wurde eingangs erläutert. Erfindungsgemäß ist in dem Pressraum eine optische Referenzoberfläche angeordnet und es ist ein Sensorantrieb vorgesehen, mit dem der Tablettensensor zwischen einer Messposition und einer Abgleichsposition verfahrbar ist. In der Messposition erfasst der Tablettensensor mit seinem Messbereich in der Rundläufertablettenpresse hergestellte Tabletten zum Messen einer Inhaltseigenschaft der Tabletten. Beispielsweise können sich die Tabletten in der Messposition des Tablettensensors noch innerhalb der Kavitäten der Matrizenscheibe befinden, nachdem die Oberstempel aus den Kavitäten herausgefahren sind. In der Abgleichsposition erfasst der Messbereich dagegen die Referenzoberfläche. Sowohl in der Messposition als auch in der Abgleichposition werden durch den Tablettensensor Messwerte erzeugt, die an einer Steuereinrichtung anliegen. Auf Grundlage der Messwerte des Tablettensensors in der Abgleichsposition gleicht die Steuereinrichtung den Tablettensensor gegen die Referenzoberfläche ab. Es ist beispielsweise möglich, dass der Tablettensensor durch den Sensorantrieb zumindest in radialer Richtung zur Matrizenscheibe und von der Matrizenscheibe weg verfahrbar ist. Der Sensorantrieb und/oder der Tablettensensor kann auf einem Sensortisch angeordnet sein. Mittels des Sensorantriebs kann der Tablettensensor unterschiedliche Positionen in dem Pressraum einnehmen und so auch nach dem Einbau in den Pressraum noch abgeglichen werden. Ein Sensorkopf des Tablettensensors kann beispielsweise über eine optische Faser mit einer Strahlungsquelle und mit der Steuereinrichtung verbunden sein. Ein Abgleichen durch Durchführen einer Referenzmessung der Referenzoberfläche mittels des Tablettensensors in der Abgleichsposition kann zum Beispiel vor und/oder während und/oder nach einem Produktionsprozess zur Herstellung von Tabletten in der Rundläufertablettenpresse erfolgen. Ein Abgleich während eines Produktionsprozesses ist besonders vorteilhaft, da Änderungen unmittelbar erkannt und berücksichtigt werden können. Beispielsweise kann der Abgleich zyklisch während der Produktion durchgeführt werden. Vor der Produktion können die richtigen Referenzen und SSTs aufgenommen werden und es kann der unkalibrierte interne Standard mit dem kalibrierten 99% Standard verglichen bzw. in Relation gesetzt werden. Während eines Produktionsprozesses können zum Beispiel in regelmäßigen zeitlichen Abständen ein Dunkelstrom und eine interne (Weiß-)Referenz ermittelt werden. Der Dunkelstrom dient als Nullabgleich und die Messung der internen (Weiß-)referenz wird mit der ermittelten Relation zu einer kalibrierten externen Referenz umgerechnet. Diese kann dann im Prozess verwendet werden. Außerdem kann überwacht werden, dass die Referenzmessungen nicht zu stark abweichen, so dass keine Verschmutzung des Sensors und/oder der Referenzoberfläche vorliegt. Bei Verschmutzung ist der Abgleich nicht mehr korrekt und es können Maßnahmen eingeleitet werden, beispielsweise ein Stopp der Rundläufertablettenpresse.

Die Erfindung erlaubt ein Berücksichtigen bzw. Kompensieren von sich beispielsweise in einem Produktionsprozess oder zwischen Produktionsprozessen verändernden Parametern innerhalb des Pressraums der Rundläufertablettenpresse, insbesondere auch nach Durchführen eines externen Abgleichs des Tablettensensors. Auf diese Weise stehen zuverlässigere und robustere Sensormesswerte zur Verfügung. Der erfindungsgemäße Abgleich erfolgt innerhalb des Pressraums und kann mehrfach durchgeführt werden, beispielsweise während eines Produktionsprozesses und/oder vor und/oder nach einem Produktionsprozess in der Presse. Durch den Sensorantrieb kann der Abgleich automatisch erfolgen, insbesondere ohne dass ein Öffnen des Pressraums für einen entsprechenden Zugang einer Bedienperson notwendig ist. Dies ist insbesondere bei in der Rundläufertablettenpresse verarbeiteten pharmazeutischen Produkten vorteilhaft, um die Belastung von Bedienpersonen zu minimieren und/oder aufwendige Schutzmaßnahmen, insbesondere bei Containmentanlagen, zu vermeiden. Ein automatischer Abgleich kann zum Beispiel in regelmäßigen Abständen erfolgen und/oder durch eine Bedienperson durch Eingabe in die Steuereinrichtung ausgelöst werden. Tablettenausschuss kann minimiert werden.

Die Referenzoberfläche kann eine Weiß- oder Grau- Referenzoberfläche sein, wobei die Steuereinrichtung dazu ausgebildet sein kann, einen Weißabgleich oder einen Grauabgleich des Tablettensensors gegen die Referenzoberfläche durchzuführen.

Der Sensor kann ein spektroskopischer Sensor, insbesondere ein NIR- oder LIF- oder Raman-Sensor, sein. Solche Sensoren sind besonders geeignet zum Messen von Inhaltseigenschaften, beispielsweise einem API-Inhalt einer Tablette. Derartige Sensoren umfassen einen Sender für elektromagnetische Strahlung, beispielsweise im Nahinfrarotwellenlängenbereich, auf die Oberfläche der Tablette und einen Empfänger zum Empfangen der von der Oberfläche der Tablette zurückreflektierten elektromagnetischen Strahlung. Die Strahlung kann auf die Oberfläche der Tablette fokussiert sein. Durch Auswertung des Spektrums der reflektierten Strahlung kann der Gehalt eines bestimmten Inhaltsstoffs der Tablette ermittelt werden. Wie bereits erläutert, kann die Inhaltseigenschaft ein Gehalt eines aktiven pharmazeutischen Bestandteils (API) in der Tablette sein. Wie ebenfalls bereits erläutert, kann sich der Tablettensensor in der Messposition oberhalb der Matrizenscheibe befinden, insbesondere derart, dass die im Messbereich des Tablettensensors erfassten Tabletten sich noch innerhalb einer Kavität der Matrizenscheibe befinden und somit in ihrer Position definiert sind.

Nach einer weiteren Ausgestaltung kann der Sensorantrieb den Tablettensensor in einer horizontalen Ebene bewegen. Es ist dann in vorteilhafterweise kein Bewegen des Tablettensensors zwischen der Messposition und Abgleichsposition in Axialrichtung der Matrizenscheibe erforderlich. Ein seitliches Verfahren des Tablettensensors in der horizontalen Ebene ist ausreichend.

Der Sensorantrieb kann mindestens einen Linearantrieb, beispielsweise zwei Linearantriebe, zum Verfahren des Tablettensensors in einer Linearbewegung und/oder mindestens einen Rotationsantrieb, beispielsweise zwei Rotationsantriebe, zum Verfahren des Tablettensensors in einer Drehbewegung umfassen. Durch einen entsprechend kombinierten Sensorantrieb kann der Tablettensensor beispielsweise auch entlang eines gekrümmten Verfahrwegs verfahren werden. Wie nachfolgend näher erläutert, ist es auch möglich, bestimmte Messstrecken über die Referenzoberfläche und/oder über eine Tablette zu realisieren. Gemäß einer besonders praxisgemäßen Ausgestaltung kann der Sensorantrieb ein elektrischer Antrieb sein. Es sind aber auch andere Antriebsarten möglich, beispielsweise ein mechanischer oder pneumatischer Antrieb.

Nach einer weiteren Ausgestaltung kann vorgesehen sein, dass der Tablettensensor und/oder die optische Referenzoberfläche und/oder die Matrizenscheibe und/oder der Sensorantrieb und/oder eine Halterung des Sensorantriebs weiterhin eine Absaugeinrichtung umfasst, die dazu ausgebildet ist, Produktstaub aus dem Messbereich des Tablettensensors abzusaugen und/oder dass der Tablettensensor und/oder die optische Referenzoberfläche und/oder die Matrizenscheibe weiterhin eine Ausblaseinrichtung umfasst, die dazu ausgebildet ist, Produktstaub aus einem Messbereich des Tablettensensors auszublasen. Durch die Absaugeinrichtungen bzw. die Ausblaseinrichtung, insbesondere umfassend eine Druckluftdüse, kann zum Beispiel die Referenzoberfläche gezielt gereinigt werden, beispielsweise im Rahmen einer Reinigungsfahrt. Auch im Bereich der Messposition kann auf diese Weise sich ansammelnder und die Messung möglicherweise verfälschender Produktstaub abgesaugt werden. In gleicher Weise ist ein Reinigen einer Sensormessfläche des Sensors und/oder einer zu messenden Tablette über die Absaugeinrichtung und/oder über eine Ausblaseinrichtung, umfassend zum Beispiel eine Druckluftdüse, möglich. Das Reinigen kann durch Ansteuern der Absaugeinrichtung und/oder der Ausblaseinrichtung mittels der Steuereinrichtung automatisch erfolgen, zum Beispiel in regelmäßigen Zeitabständen.

Gemäß einer weiteren Ausgestaltung kann der Sensorantrieb dazu ausgebildet sein, den Tablettensensor für einen Abgleich einmal oder mehrfach entlang einer Messstrecke über die Referenzoberfläche zu verfahren, wobei der Tablettensensor während des Verfahrens entlang der Messstrecke mehrfach Messwerte aufnimmt und zum Abgleich an die Steuereinrichtung gibt. Natürlich ist es auch möglich, dass der Sensorantrieb dazu ausgebildet ist, den Tablettensensor entlang einer Messstrecke über eine zu messende Tablette zu verfahren, wobei der Tablettensensor wiederum während des Verfahrens entlang der Messstrecke mehrfach Messwerte aufnimmt und an die Steuereinrichtung gibt. Auch möglich ist es, dass sich die Messposition so verstellen lässt, dass außerhalb des Zentrums der Tablette gemessen wird. Bei der vorgenannten Ausgestaltung fährt der Tablettensensor also mehrere Abgleichpositionen entlang der Messstrecke ab. Die Messstrecke kann entlang einer Geraden verlaufen oder eine gekrümmte Form aufweisen. Auch ein mehrfaches Überfahren der Referenzoberfläche (Pendeln) ist möglich, ebenso ein Überfahren der Referenzoberfläche mit einer Bogenkurve oder einer anderen Bahnkurve. Eine Messung entlang einer solchen Messstrecke ermöglicht es, lokale Inhomogenitäten oder Verschmutzungen oder Formabweichungen der Referenzoberfläche aus den Messwerten für den Abgleich zu erkennen und/oder zu kompensieren, um eine entsprechende Verfälschung der Messwerte zu vermeiden. Beispielsweise kann die Steuereinrichtung dazu ausgebildet sein, für den Abgleich des Tablettensensors gegen die Referenzoberfläche einen Mittelwert oder Median von entlang der Messstrecke aufgenommenen Messwerten zu bilden. Gleiches gilt entsprechend für eine Messstrecke über eine zu messende Tablette. Somit kann auch eine optimale Messstrecke des Tablettensensors über die zu messende Tabletten realisiert werden. Nach einer weiteren Ausgestaltung kann die Steuereinrichtung dazu ausgebildet sein, in der Abgleichposition aufgenommene Messwerte für den Abgleich des Tablettensensors mit im Rahmen eines vorab durchgeführten Abgleichs aufgenommenen Messwerten zu vergleichen. Der erfindungsgemäße interne Abgleich innerhalb des Pressraums wird also mit einem beispielsweise vor der Montage des Tablettensensors in dem Pressraum durchgeführten externen Abgleich verglichen. Die Steuereinrichtung kann weiter dazu ausgebildet sein, im Rahmen des Abgleichs Strahlungsleistungsschwankungen, Verschmutzungen des Tablettensensors und/oder der Referenzoberfläche, eine Degradation des Tablettensensors, beispielsweise einer Leuchtquelle, und/oder Temperaturänderungen zu erkennen und/oder rechnerisch zu kompensieren. Solche beispielsweise mit der Zeit auftretende Veränderungen zum Beispiel des Tablettensensors können durch Vergleich mit einem ursprünglich durchgeführten externen Abgleich erkannt und kompensiert werden.

Bei Feststellen einer Überschreitung von Grenzwerten der erkannten und/oder zu kompensierenden Größen kann die Steuereinrichtung ein Warnsignal ausgeben und/oder die Tablettenproduktion in der Rundläufertablettenpresse stoppen. Wird also beispielsweise im Rahmen eines Abgleichs festgestellt, dass ein Verschmutzungsgrad des Tablettensensors einen zulässigen Grenzwert überschreitet, kann hierauf entsprechend reagiert werden bevor möglicherweise Tablettenausschuss produziert wird.

Wie bereits erläutert, können der Tablettensensor und/oder der Sensorantrieb und/oder die Referenzoberfläche auf einem in dem Pressraum angeordneten Sensortisch angeordnet sein.

Die Erfindung betrifft auch ein Verfahren zum Durchführen eines Abgleichs eines Tablettensensors mit einer erfindungsgemäßen Rundläufertablettenpresse.

Ein Ausführungsbeispiel der Erfindung wird nachfolgend anhand von Figuren näher erläutert. Es zeigen schematisch:
- Figur 1: eine erfindungsgemäße Rundläufertablettenpresse in abgewickelter Darstellung des Rotors,
- Figur 2: eine vergrößerte Darstellung eines in der Rundläufertablettenpresse eingesetzten Tablettensensors in einer ersten Position in einer perspektivischen Ansicht,
- Figur 3: die Darstellung aus Figur 2 in einer zweiten Position des Tablettensensors, und
- Figur 4: eine perspektivische Ansicht des Tablettensensors von der Unterseite.

Soweit nichts anderes angegeben ist, bezeichnen in den Figuren gleiche Bezugszeichen gleiche Gegenstände.

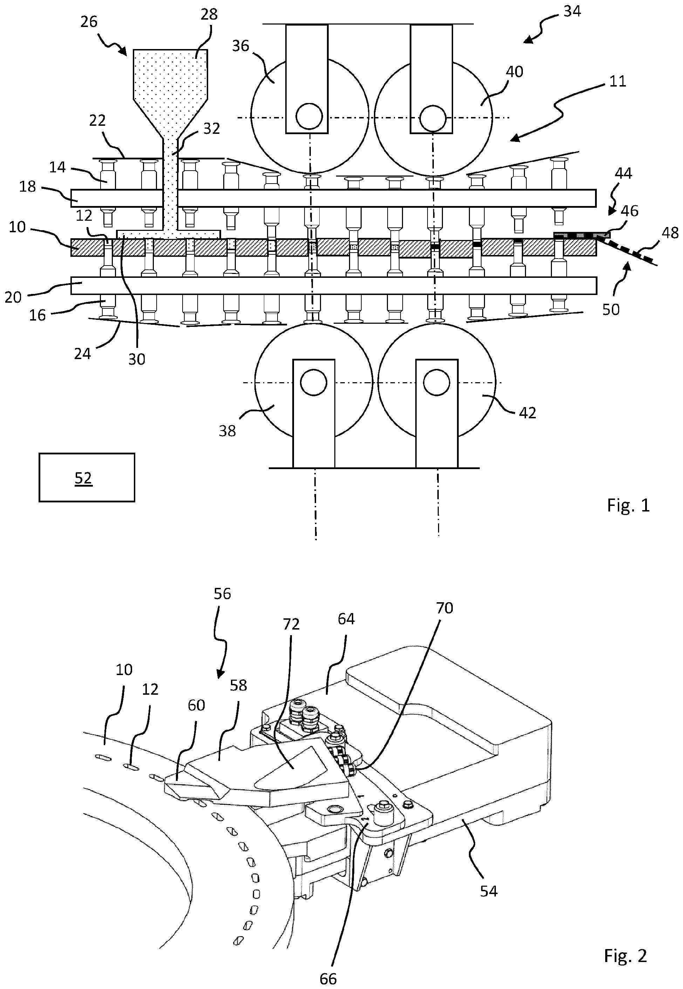

In der in Figur 1 gezeigten Rundläufertablettenpresse wird pulverförmiges Material zu Tabletten verpresst. Die Rundläufertablettenpresse umfasst einen in einem Pressraum 11 durch einen Drehantrieb drehend angetriebenen Rotor mit einer Matrizenscheibe 10, die eine Mehrzahl von Kavitäten 12 aufweist. Die Kavitäten 12 können beispielsweise durch Bohrungen der Matrizenscheibe 10 gebildet sein. Weiter umfasst der Rotor eine Mehrzahl von oberen Pressstempeln 14 und unteren Pressstempeln 16, die mit der Matrizenscheibe 10 synchron umlaufen. Die oberen Pressstempel 14 sind in einer oberen Stempelführung 18 axial geführt und die unteren Pressstempel 16 sind in einer unteren Stempelführung 20 axial geführt. Die axiale Bewegung der oberen Pressstempel 14 und unteren Pressstempel 16 im Zuge der Drehung des Rotors wird durch obere Steuerkurvenelemente 22 und untere Steuerkurvenelemente 24 gesteuert. Die Rundläufertablettenpresse umfasst weiterhin eine Fülleinrichtung 26, die ein Füllreservoir 28 und eine Füllkammer 30 aufweist, die über ein Füllrohr 32 verbunden sind. Auf diese Weise gelangt in dem vorliegenden Beispiel Pulvermaterial aus dem Füllreservoir 28 über das Füllrohr 32 schwerkraftbedingt in die Füllkammer 30 und aus dieser über eine an der Unterseite der Füllkammer 30 vorgesehene Befüllöffnung wiederum schwerkraftbedingt in die Kavitäten 12 der Matrizenscheibe 10.

Die Rundläufertablettenpresse umfasst außerdem eine Druckeinrichtung 34. Die Druckeinrichtung 34 umfasst eine Vordruckeinrichtung mit einer oberen Vordruckrolle 36 und einer unteren Vordruckrolle 38, sowie eine Hauptdruckeinrichtung mit einer oberen Druckrolle 40 und einer unteren Druckrolle 42. Darüber hinaus umfasst die Rundläufertablettenpresse eine Auswurfeinrichtung 44 und eine Abstreifeinrichtung 46 mit einem Abstreifelement, das die in der Rundläufertablettenpresse hergestellten Tabletten 48 einer Ablaufeinrichtung 50 zum Abführen aus der Rundläufertablettenpresse zuführt. Die Abstreifeinrichtung 46 kann zum Beispiel ein vorzugsweise sichelförmiges Abstreifelement umfassen, das im Bereich der Auswurfeinrichtung 44 durch die unteren Pressstempel 16 auf die Oberseite der Matrizenscheibe 10 geförderte Tabletten 48 von der Matrizenscheibe 10 abstreift und der Ablaufeinrichtung 50 zuführt.

Die Rundläufertablettenpresse umfasst außerdem eine Steuereinrichtung 52 zum Steuern des Betriebs der Rundläufertablettenpresse und zum Durchführen eines Abgleichs eines im Pressraum 11 der Rundläufertablettenpresse angeordneten Tablettensensors, wie nachfolgend näher erläutert.

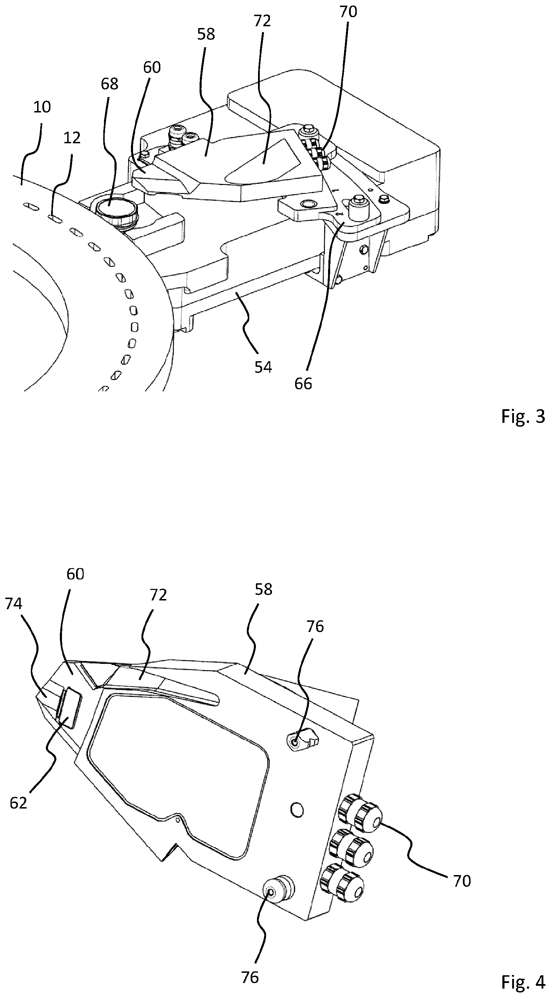

In den Figuren 2 und 3 ist ein an der Matrizenscheibe 10 angeordneter Sensortisch 54 zu erkennen, auf dem ein Tablettensensor 56 verfahrbar angeordnet ist. Der Tablettensensor 56 umfasst ein Sensorgehäuse 58 und einen Sensorkopf 60. In der in Figur 2 gezeigten Messposition befindet sich der Sensorkopf 60 oberhalb der Matrizenscheibe 10 derart, dass ein Messbereich des Tablettensensors 56 in der Rundläufertablettenpresse hergestellte und noch innerhalb der Kavitäten 12 befindliche Tabletten für eine Messung eine Inhaltseigenschaft, beispielsweise eines Gehalts eines aktiven pharmazeutischen Bestandteils (API) erfasst. Eine den Messbereich bildende Sensorfläche 62 ist in der Ansicht von der Unterseite in Figur 4 zu erkennen. Im Betrieb der Rundläufertablettenpresse werden die von dem Tablettensensor 56 in der Messposition erfassten Messwerte an die Steuereinrichtung 52 gegeben, die auf dieser Grundlage beispielsweise überprüft, ob die gemessene Inhaltseigenschaft im Rahmen vorgegebener Parameter liegt.

Auf dem Sensortisch 54 ist weiterhin ein Sensorantrieb 64 angeordnet, mit dem ein den Tablettensensor 56 tragender Halteabschnitt 66 in Bezug auf die Matrizenscheibe 10 radial verfahren werden kann zwischen der in Figur 2 dargestellten Messposition und einer in Figur 3 dargestellten Ausbauposition, aus der der Tablettensensor 56 aus dem Pressraum 11 ausgebaut werden kann. Der Sensorantrieb 64 kann ein elektrischer Sensorantrieb sein. Er kann mindestens einen Linearantrieb umfassen zum linearen Verfahren des Tablettensensors 56 in Radialrichtung zur Matrizenscheibe 10. Er kann auch einen Rotationsantrieb umfassen, mit dem der Tablettensensor 56, insbesondere sein Sensorgehäuse 58 gedreht werden kann. Der Sensorantrieb 64 wird durch die Steuereinrichtung 52 angesteuert.

Auf dem Sensortisch 54 befindet sich darüber hinaus eine in Figur 3 zu erkennende und in Figur 2 durch das Sensorgehäuse 58 abgedeckte Referenzoberfläche 68, bei der es sich beispielsweise um eine Weiß- oder Grau-Referenzoberfläche 68 handeln kann. Wird der Tablettensensor 56 aus der in Figur 3 gezeigten Ausbauposition mittels des Sensorantriebs 64 in die in Figur 2 dargestellte Messposition verfahren, überfährt die Sensorfläche 62 und damit der Messbereich des Tablettensensors 56 die Referenzoberfläche 68 entlang einer Messstrecke, die abhängig von der Ausgestaltung und Ansteuerung des Sensorantriebs 64 eine gerade oder eine gekrümmte Messstrecke sein kann. Während des Durchfahrens der Messstrecke und damit des Durchfahrens mehrerer Abgleichspositionen durch den Tablettensensor 56 erfasst der Sensorkopf 60 mit der Sensorfläche 62 Messwerte der Referenzoberfläche 68, die ebenfalls an die Steuereinrichtung 52 gegeben werden. Auf Grundlage dieser Messwerte gleicht die Steuereinrichtung 52 den Tablettensensor gegen die Referenzoberfläche 68 ab. Insbesondere kann auf diese Weise automatisch und innerhalb des Pressraums 11 der Rundläufertablettenpresse beispielsweise ein Weißabgleich oder ein Grauabgleich erfolgen. Werden hierbei Abweichungen gegenüber einem vor der Montage des Tablettensensors 56 durchgeführten externen Weiß- oder Grauabgleich außerhalb des Pressraums 11 festgestellt, kann dies durch die Steuereinrichtung 52 bei der Auswertung von in der Messposition erfassten Messwerten des Tablettensensors 56 berücksichtigt werden, insbesondere rechnerisch kompensiert werden.

Der Tablettensensor 56 ist ein spektroskopischer Sensor, beispielsweise ein NIR- oder LIF- oder Raman-Sensor. Hierzu kann der Sensorkopf 60 beispielsweise über an Anschlüsse 70 angeschlossene optische Leiter an eine externe Strahlungsquelle für elektromagnetische Strahlung, zum Beispiel im Nahinfrarotwellenlängenbereich angeschlossen werden. Über die Anschlüsse 70 kann auch ein Anschluss des Tablettensensors 56 an die Steuereinrichtung 52 erfolgen. In das Sensorgehäuse 58 ist darüber hinaus ein Absaugrohr 72 integriert, das Teil einer Absaugeinrichtung bildet. Auf diese Weise kann die Messergebnisse verfälschender Produktstaub aus dem Messbereich des Tablettensensors 56 abgesaugt und aus dem Pressraum 11 der Rundläufertablettenpresse abgeführt werden. Weiterhin ist an der Unterseite des Sensorkopfes 60 neben der Sensorfläche 62 eine Druckluftdüse 74 ausgebildet, die Teil einer Ausblaseinrichtung bildet, und die an eine entsprechende Druckluftversorgung angeschlossen werden kann. Auf diese Weise kann der Bereich der Sensorfläche 62 ebenfalls von Produktstaub oder anderen Verunreinigungen befreit werden.

Insbesondere in Figur 4 ist zu erkennen, dass sich die Referenzoberfläche 68 in der Ebene der Oberseite der Matrizenscheibe 10 befindet. Damit ist während des Verfahrens des Tablettensensors 56 zwischen den Abgleichspositionen und der Messposition kein Verfahren des Tablettensensors 56 in Axialrichtung der Matrizenscheibe 10 erforderlich. Mittels an der Unterseite des Sensorgehäuses 58 vorgesehener Montagefüße 76 ist im Rahmen der Montage des Tablettensensors 56 auf dem Sensortisch 54 eine Höhenanpassung möglich.

Der oben erläuterte Abgleich des Tablettensensors 56 kann automatisch durch die Steuereinrichtung 52 durchgeführt werden, beispielsweise während jedes Produktionsprozesses und/oder vor und/oder nach jedem Produktionsprozess zur Herstellung von Tabletten in der Rundläufertablettenpresse. Ein Öffnen des Pressraums 11 ist hierfür nicht erforderlich. Etwaige, die Messergebnisse des Tablettensensors 56 beeinflussende Veränderungen von Parametern im Rahmen des Betriebs der Rundläufertablettenpresse können sicher erkannt und berücksichtigt werden. Durch das Aufnehmen von Messwerten für den Abgleich entlang einer Messstrecke über die Referenzoberfläche 68 können Verunreinigungen und/oder Inhomogenitäten, wie Helligkeits- oder Farbabweichungen oder Unebenheiten, erkannt bzw. kompensiert werden. So kann durch die Steuereinrichtung 52 beispielsweise ein Mittelwert oder Median über die entlang der Messstrecke aufgenommenen Messwerte erfolgen. Mittels des Tablettensensors 56 ist es in vorteilhafter Weise auch möglich, Messwerte entlang einer Messstrecke über eine zu messende Tablette zu erfassen, also entsprechend mehrere Messpositionen vorzusehen, beispielsweise gesteuert durch den Sensorantrieb 64 oder bei feststehendem Tablettensensor 56 durch Drehung der Matrizenscheibe 10. Auch kann auf diese Weise außerhalb des Zentrums der Tabletten gemessen werden. Hierdurch können Abweichungen zum Beispiel der gemessenen Inhaltseigenschaft über die Oberfläche der Tabletten berücksichtigt werden. Auch in diesem Fall ist es möglich, dass durch die Steuereinrichtung 52 entlang der Messstrecke über eine Tablette aufgenommene Messwerte gemittelt werden, um verfälschende Einflüsse durch lokale Veränderungen der Inhaltseigenschaft einer Tablette zu erkennen und/oder zu kompensieren.

### Bezugszeichen

- 10: Matrizenscheibe
- 12: Kavitäten
- 14: obere Pressstempel
- 16: untere Pressstempel
- 18: obere Stempelführung
- 20: untere Stempelführung
- 22: obere Steuerkurvenelemente
- 24: untere Steuerkurvenelemente
- 26: Fülleinrichtung
- 28: Füllreservoir
- 30: Füllkammer
- 32: Füllrohr
- 34: Druckeinrichtung
- 36: obere Vordruckrolle
- 38: untere Vordruckrolle
- 40: obere Druckrolle
- 42: untere Druckrolle
- 44: Auswurfeinrichtung
- 46: Abstreifeinrichtung
- 48: Tabletten
- 50: Ablaufeinrichtung
- 52: Steuereinrichtung
- 54: Sensortisch
- 56: Tablettensensor
- 58: Sensorgehäuse
- 60: Sensorkopf
- 62: Sensorfläche

- 64: Sensorantrieb
- 66: Halteabschnitt
- 68: Referenzoberfläche
- 70: Anschlüsse
- 72: Absaugrohr
- 74: Druckluftdüse
- 76: Montagefüße

## Patentansprüche

1. Rundläufertablettenpresse, umfassend einen mittels eines Drehantriebs in einem Pressraum (11) der Rundläufertablettenpresse drehbaren Rotor, wobei der Rotor eine obere Stempelführung (18) für obere Pressstempel (14) und eine untere Stempelführung (20) für untere Pressstempel (16) sowie eine zwischen den Stempelführungen angeordnete Matrizenscheibe (10) aufweist, wobei die Pressstempel (14, 16) mit Kavitäten (12) der Matrizenscheibe (10) zusammenwirken, wobei die Rundläufertablettenpresse weiter eine Fülleinrichtung (26) umfasst, durch die zu verpressendes Pulvermaterial in die Kavitäten (12) der Matrizenscheibe (10) gefüllt wird, und wobei die Rundläufertablettenpresse eine Druckeinrichtung (34) mit einer oberen Druckeinheit (40) und einer unteren Druckeinheit (42) umfasst, die im Betrieb mit den oberen Pressstempeln (14) und mit den unteren Pressstempeln (16) zum Verpressen des Pulvermaterials in den Kavitäten (12) der Matrizenscheibe (10) zu Tabletten (48) zusammenwirken, wobei in dem Pressraum (11) ein Tablettensensor (56) angeordnet ist, der dazu ausgebildet ist, eine Inhaltseigenschaft von in der Rundläufertablettenpresse hergestellten Tabletten (48) zu messen, **dadurch gekennzeichnet, dass** in dem Pressraum (11) weiterhin eine optische Referenzoberfläche (68) angeordnet ist, und dass ein Sensorantrieb (64) vorgesehen ist, mit dem der Tablettensensor (56) zwischen einer Messposition, in der ein Messbereich des Tablettensensors (56) in der Rundläufertablettenpresse hergestellte Tabletten (48) zum Messen der Inhaltseigenschaft der Tabletten (48) erfasst, und einer Abgleichsposition, in der der Messbereich des Tablettensensors (56) die Referenzoberfläche (68) erfasst, verfahrbar ist, und dass eine Steuereinrichtung (52) vorgesehen ist, an der Messwerte des Tablettensensors (56) anliegen, und die dazu ausgebildet ist, den in der Abgleichsposition befindlichen Tablettensensor (56) gegen die Referenzoberfläche (68) abzugleichen.

2. Rundläufertablettenpresse nach Anspruch 1, **dadurch gekennzeichnet, dass** die Referenzoberfläche (68) eine Weiß- oder Grau-Referenzoberfläche (68) ist, und dass die Steuereinrichtung (52) dazu ausgebildet ist, einen Weißabgleich oder einen Grauabgleich des Tablettensensors (56) gegen die Referenzoberfläche (68) durchzuführen.

3. Rundläufertablettenpresse nach einem der vorhergehenden Ansprüche, **dadurch gekennzeichnet, dass** der Tablettensensor (56) ein spektroskopischer Sensor (56), insbesondere ein NIR- oder LIF- oder Raman-Sensor (56), ist.

4. Rundläufertablettenpresse nach einem der vorhergehenden Ansprüche, **dadurch gekennzeichnet, dass** sich der Tablettensensor (56) in der Messposition oberhalb der Matrizenscheibe (10) befindet.

5. Rundläufertablettenpresse nach einem der vorhergehenden Ansprüche, **dadurch gekennzeichnet, dass** der Sensorantrieb (64) den Tablettensensor (54) in einer horizontalen Ebene bewegt.

6. Rundläufertablettenpresse nach einem der vorhergehenden Ansprüche, **dadurch gekennzeichnet, dass** der Sensorantrieb (64) mindestens einen Linearantrieb zum Verfahren des Tablettensensors (56) in einer Linearbewegung und/oder mindestens einen Rotationsantrieb zum Verfahren des Tablettensensors (56) in einer Drehbewegung umfasst.

7. Rundläufertablettenpresse nach einem der vorhergehenden Ansprüche, **dadurch gekennzeichnet, dass** der Sensorantrieb (64) ein elektrischer Antrieb ist.

8. Rundläufertablettenpresse nach einem der vorhergehenden Ansprüche, **dadurch gekennzeichnet, dass** der Tablettensensor (56) und/oder die optische Referenzoberfläche (68) und/oder die Matrizenscheibe (10) und/oder der Sensorantrieb (64) und/oder eine Halterung des Sensorantriebs (64) weiterhin eine Absaugeinrichtung umfasst, die dazu ausgebildet ist, Produktstaub aus dem Messbereich des Tablettensensors (56) abzusaugen und/oder dass der Tablettensensor (56) und/oder die optische Referenzoberfläche (68) und/oder die Matrizenscheibe (10) weiterhin eine Ausblaseinrichtung umfasst, die dazu ausgebildet ist, Produktstaub aus einem Messbereich des Tablettensensors (56) auszublasen.

9. Rundläufertablettenpresse nach einem der vorhergehenden Ansprüche, **dadurch gekennzeichnet, dass** der Sensorantrieb (64) dazu ausgebildet ist, den Tablettensensor (56) für einen Abgleich einmal oder mehrfach entlang einer Messstrecke über die Referenzoberfläche (68) zu verfahren, wobei der Tablettensensor (56) während des Verfahrens entlang der Messstrecke mehrfach Messwerte aufnimmt und zum Abgleich an die Steuereinrichtung (52) gibt.

10. Rundläufertablettenpresse nach Anspruch 9, **dadurch gekennzeichnet, dass** die Steuereinrichtung (52) dazu ausgebildet ist, für den Abgleich des Tablettensensors (56) gegen die Referenzoberfläche (68) einen Mittelwert oder Median von entlang der Messstrecke aufgenommenen Messwerten zu bilden.

11. Rundläufertablettenpresse nach einem der vorhergehenden Ansprüche, **dadurch gekennzeichnet, dass** die Steuereinrichtung (52) dazu ausgebildet ist, in der Abgleichsposition aufgenommene Messwerte für den Abgleich des Tablettensensors (56) mit im Rahmen eines vorab durchgeführten Abgleichs aufgenommenen Messwerten zu vergleichen.

12. Rundläufertablettenpresse nach einem der vorhergehenden Ansprüche, **dadurch gekennzeichnet, dass** die Steuereinrichtung (52) dazu ausgebildet ist, im Rahmen des Abgleichs Strahlungsleistungsschwankungen, Verschmutzungen des Tablettensensors (56) und/oder der Referenzoberfläche (68), eine Degradation des Tablettensensors (56) und/oder Temperaturänderungen zu erkennen und/oder rechnerisch zu kompensieren.

13. Rundläufertablettenpresse nach Anspruch 12, **dadurch gekennzeichnet, dass** die Steuereinrichtung (52) dazu ausgebildet ist, bei Feststellen einer Überschreitung von Grenzwerten der erkannten und/oder zu kompensierenden Größen ein Warnsignal auszugeben und/oder die Tablettenproduktion in der Rundläufertablettenpresse zu stoppen.
